# EUROPEAN PATENT APPLICATION

(11) **EP 4 585 354 A1**
(43) Date of publication of application: **16.07.2025**
(21) Application number: 24151081.7
(22) Date of filing: 10.01.2024
(51) Int. Cl.: B23K 26/0622, B23K 26/38, B23K 26/402, B23K 101/36, B23K 103/18

(54) **METHOD FOR CUTTING A STACK OF SEVERAL LAYERS**

(71) Applicant: TOYOTA JIDOSHA KABUSHIKI KAISHA, Toyota-shi, Aichi-ken, 471-8571 (JP); Fraunhofer Institute for Production Technology IPT, 52074 Aachen (DE)
(72) Inventor: ALESSIO, Caterina, 1140 BRUSSELS (BE); KOCH, Jan-Hendrik, 52074 AACHEN (DE); HUESING, Florian, 52070 AACHEN (DE); JANSSEN, Henning, 52074 AACHEN (DE); KOHSE, Martin, 50827 COLOGNE (DE)
(74) Representative: Cabinet Beau de Loménie

(57) **Abstract**

A method for cutting a stack of at least two layers, the method comprising: using a laser (40) generating a pulsed beam directed toward the stack (10), piloting the beam so as to follow a pattern to be cut in the stack (10), wherein the pulse duration of the beam is lower than 10 ps; wherein the fluence (Φ) of the beam is greater than 127 J/cm², and wherein the pulse overlap (θ) of the beam between two successive pulses is greater than 50%.

## Description

### BACKGROUND OF THE INVENTION

### 1. Field of the invention

The present invention relates to a method for cutting a stack of at least two layers. Such a method can notably be used to cut a stack of several layers forming part of a fuel cell.

### 2. Description of Related Art

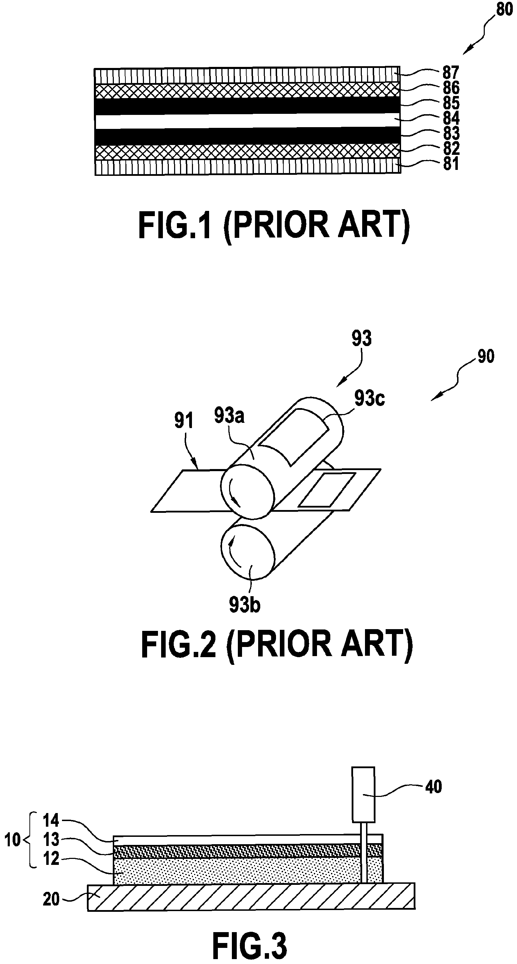

The present invention lies, in particular, within the context of producing fuel cell assemblies. Indeed, as shown on FIG. 1, a conventional fuel cell 80 comprises a stack of different layers, each having a specific function. Specifically, a conventional fuel cell 80 comprises, in this order, an anode-side separator 81, an anode-side gas diffusion layer 82, an anode-side catalyst layer 83, a membrane 84, a cathode-side catalyst layer 85, a cathode-side diffusion layer 86 and a cathode-side separator 87.

The separators 81, 87 comprise channels intended to supply the reagents of the cell reaction and, in some cases, the cooling fluid intended to cool the fuel cell 80. The separators 81, 87 are also intended to conduct the electric current produced in the fuel cell 80 to a neighboring cell or to a terminal of the fuel cell 80.

The gas diffusion layers 82, 86 are intended to enable the diffusion of the reagents from the separators 81, 87 to the corresponding catalyst layer 83, 85, and of the reaction products from the catalyst layers 83, 85 to the corresponding separator 81, 87. For example, such diffusion may be possible thanks to porosities.

The catalyst layers 83, 85 constitute the electrodes, respectively the cathode and the anode, where the half reactions ensuring the functioning of the fuel cell 80 take place. Such catalyst layers 83, 85 are generally porous in order to let enter the reagents and let exit the reaction products. As their names suggest, each catalyst layer 83, 85 includes a catalyst enabling to catalyze the corresponding half-reaction of the fuel cell 80.

The membrane 84 is intended to authorized the migration of some ions between the cathode-side catalyst layer 83 and the anode-side catalyst layer 85 while blocking the electrons produced at the anode by the oxidation half-reaction.

Usually, the fuel cells are produced in a continuous way in a moving band production line. A known production line 90 is depicted on FIG. 2. In such a production line 90, a stack 91 including the anode-side gas diffusion layer 82, the anode-side catalyst layer 83 and the membrane 84, is supplied as a continuous band supported by a supporting band. The stack 91 passes between the two rotating rolls 93a, 93b of a rotating press 93: because the upper roll 93a comprises a blade 93c having a predetermined geometry, the stack 91 is periodically cut according to said predetermined geometry.

Accordingly, in the usual production methods, the stacks are cut thanks to a rotating blade 93c. However, such a rotating blades 93c has the disadvantage to wear easily and rapidly, so that the cutting operation may become imprecise or incomplete over the time. Also, since this blade 93c is an integral part of the roll 93a, every change in the geometry to be cut requires producing a distinct and specific roll having a blade 93c corresponding to the new desired geometry, which is particularly cumbersome and costly. Finally, using such a blade involves a physical touch of the fuel cell parts that can lead to undesired contamination.

Therefore, there exists a need for a method for cutting a stack of at least two layers which enables to solve, at least partly, the drawbacks of the known methods.

### SUMMARY

The present invention has been made in the light of the above problems.

The present invention provides a method for cutting a stack of at least two layers, the method comprising:
- using a laser generating a pulsed beam directed toward the stack,
- piloting the beam so as to follow a pattern to be cut in the stack,

wherein the pulse duration of the beam is lower than 10 ps,
wherein the fluence of the beam is greater than 127 J/cm², and
wherein the pulse overlap of the beam between two successive pulses is greater than 50%.

In the present disclosure, the expressions such as "lower", "greater" and "between" must be interpreted in their broadest sense, namely including the case "equal to".

Thanks to such a laser generating a pulsed beam directed toward the stack, it is possible to cut easily and efficiently the stack without using a mechanical blade. Therefore, contrary to a mechanical blade which wears and blunts, the precision and the efficiency of the laser remain high and do not decrease over the time.

Also, the laser beam can be piloted at will to cut any desired pattern. In this respect, the pattern to be cut can be changed simply by changing the programming of the laser piloting: no mechanical part has to be changed. As a result, it is easy to produce cut-out parts having certain dimensions then switching to cut-out parts having other dimensions without any delay. Therefore, the buying and storing of multiple mechanical blades is spared and the use time of the production line can be optimized.

Besides, the use of ultra-short laser pulses enables a precise cut, at the scale of a few atoms only, therefore reducing the risk of damaging the layers along the beam path. Particularly, the parameters presented above enable to successfully cut such a two-layer stack while limiting the occurrence of surrounding damages.

In some embodiments, the stack is a membrane electrode assembly including at least a membrane and a catalyst layer stacked together. The method according to the present invention is indeed particularly useful within the framework of fuel cell production.

In some embodiments, the membrane electrode assembly further includes a gas diffusion layer which is cut through by the laser beam. It is indeed advantageous to cut as many layers as possible in one laser operation.

In some embodiments, the membrane electrode assembly comprises a first catalyst layer, on a first side of the membrane, and a second catalyst layer, on a second side of the membrane.

In some embodiments, the membrane is a proton-exchange membrane.

In some embodiments, the membrane comprises fluoropolymer, optionally sulfonated tetrafluoroethylene based fluoropolymer-copolymer. Particularly, the membrane may be made of commercial Nafion.

In some embodiments, the catalyst layer comprises platinum and carbon.

In some embodiments the gas diffusion layer comprises carbon and PTFE. Particularly, the gas diffusion layer may be a non-woven carbon paper with a microporosities comprising PTFE.

In some embodiments, the thickness of the membrane is greater than 5 µm, optionally greater than 15 µm. However, the thickness of the membrane may be lower than 50µm.

In some embodiments, the thickness of the catalyst layer is greater than 5 µm, optionally greater than 10 µm. However, the thickness of the catalyst layer may be lower than 15 µm.

In some embodiments, the thickness of the gas diffusion layer is greater than 100 µm, optionally greater than 150 µm, still optionally greater than 200 µm. However, the thickness of the gas diffusion layer may be lower than 250 µm.

In some embodiments, the pulse duration of the beam is lower than 8 ps, optionally lower than 500 fs, still optionally lower than 350 fs. The lower the pulse duration, the more precise and clean the cut.

In some embodiments, the spot diameter of the beam is lower than 10 µm. The lower the spot diameter, the more precise and clean the cut.

In some embodiments, the spot diameter of the beam is greater than 1 µm. A compromise has to be found regarding the spot diameter between the cut precision and the duration needed to complete the cutting operation: such a minimal value is satisfactory to ensure an acceptable cutting velocity.

In some embodiments, the wavelength of the beam is comprised between 400 and 1100 nm, optionally between 500 and 580 nm, still optionally between 515 and 540 nm.

In some embodiments, the fluence of the beam is greater than 250 J/cm². The fluence value may be tuned depending on the number and the thickness of the layers to be cut.

In some embodiments, the fluence of the beam is lower than 500 J/cm², optionally lower than 300 J/cm², still optionally lower than 150 J/cm². A compromise has to be found regarding the fluence between the cutting efficiency, and therefore the number of repetitions needed to completely cut the stack, and the wish to limit the surrounding damages during the cutting operation.

In some embodiments, the power of the laser is greater than 1 W, optionally greater than 5 W, still optionally greater than 10W. However, the power of the laser may be lower than 20 W.

In some embodiments, the pulse frequency of the beam is greater than 50 kHz, optionally greater than 100 kHz.

In some embodiments, the pulse frequency of the beam is lower than 500 kHz, optionally lower than 400 kHz.

In some embodiments, the pulse overlap of the beam is greater than 80%, optionally greater than 90%, still optionally greater than 95%. A compromise has to be found regarding the pulse overlap between the cutting efficiency, and therefore the number of repetitions needed to completely cut the stack, and the duration needed to complete the cutting operation.

In some embodiments, each portion of the pattern to be cut is swept by the beam of the laser a single time. The duration of the cutting operation can therefore be rather short.

In some embodiments, at least a given portion of the pattern to be cut is swept by the beam of the laser more than one time and up to ten times, optionally two, three or four times. Such an option is preferable when the number and/or the thickness of the layers is important to ensure that the pattern to be cut is completely cut through the whole thickness of the stack.

In some embodiments, a supporting sublayer is provided under the stack during the use of the laser, the supporting sublayer not being cut through by the beam. Such a supporting sublayer enables to improve the cutting efficiency of the laser beam while limiting the surrounding damages. Particularly, using such a supporting sublayer enables to cut a same stack with a reduced fluence of the beam, a reduced overlap and/or a reduced number of repetitions, thus reducing the duration of the cutting operation and/or the surrounding damages.

In some embodiments the supporting sublayer is made of inorganic material, optionally of metal, ceramic or glass. These materials considerably improve cutting efficiency and are fairly resistant to laser impact.

In some embodiments, the sublayer is made of organic material, optionally of polymeric material Particularly, the sublayer may be made of polyether ether ketone (PEEK). This material is particularly adapted to provide a movable sublayer used in a roll to roll system.

In some embodiments, the thickness of the supporting sublayer is comprised between 0.1 mm to 50 mm, optionally between 0.5 mm to 10 mm.

In some embodiments, the stack is clamped in a clamping tool during the use of the laser. Such a clamping tool enables to maintain the stack in a precise position with respect to the laser and, notably, to reduce the local deformations of the stack: therefore, this helps to improve the precision and the efficiency of the cutting operation.

The above mentioned features and advantages, and others, will become apparent when reading the following detailed description of exemplary embodiments of the presented method for cutting a stack of at least two layers. This detailed description refers to the accompanying drawings.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a known fuel cell.
FIG. 2 illustrates a known fuel cell production line.
FIG. 3 and 4 schematically illustrate a cutting operation according to the invention.
FIG. 5 illustrates a clamping tool.
FIG. 6 illustrates a pulse overlap.
FIG. 7 and 8 illustrate experimental results of a first test.
FIG. 9 and 10 illustrate experimental results of a second test.
FIG. 11, 12 and 13 illustrate experimental results of a third test.
FIG. 14, 15 and 16 illustrate experimental results of a fourth test.
FIG. 17, 18 and 19 illustrate experimental results of a fifth test.

### DETAILED DESCRIPTION OF EMBODIMENTS

In order to make the invention more concrete, exemplary embodiments of proposed method for cutting a stack are described in detail below with reference to the accompanying drawings. It should be recalled that the invention is not limited to these examples.

FIG. 3 illustrates a membrane electrode assembly 10 intended to be cut. This membrane electrode assembly 10 is a stack of three layers: a gas diffusion layer 12, a catalyst layer 13 and a membrane 14. In the present example, the gas diffusion layer 12 and the catalyst layer 13 are those of the anode-side of a fuel cell; however, of course, the invention is equally application to layers of the cathode-side.

In the present example, the gas diffusion layer 12 is a non-woven carbon paper with a microporosities comprising PTFE, commercially available under the name SGL Sigracet 22BB; the thickness of the gas diffusion layer 12 is equal to 215 µm.

In the present example, the catalyst layer 13 is a layer of platinum and carbon with a content of 46.8 %wt. in platinum, commercially available from Tanaka Kikinzoku Kogyo; the thickness of the catalyst layer 13 is equal to 5 µm.

In the present example, the membrane 14 is a membrane made of Nafion, commercially available under the name NC500; the thickness of the membrane is equal to 15 µm.

The membrane electrode assembly 10 is supported by a sublayer 20. This sublayer 20 may be made of different material, for example of PEEK, of glass, or of ceramic.

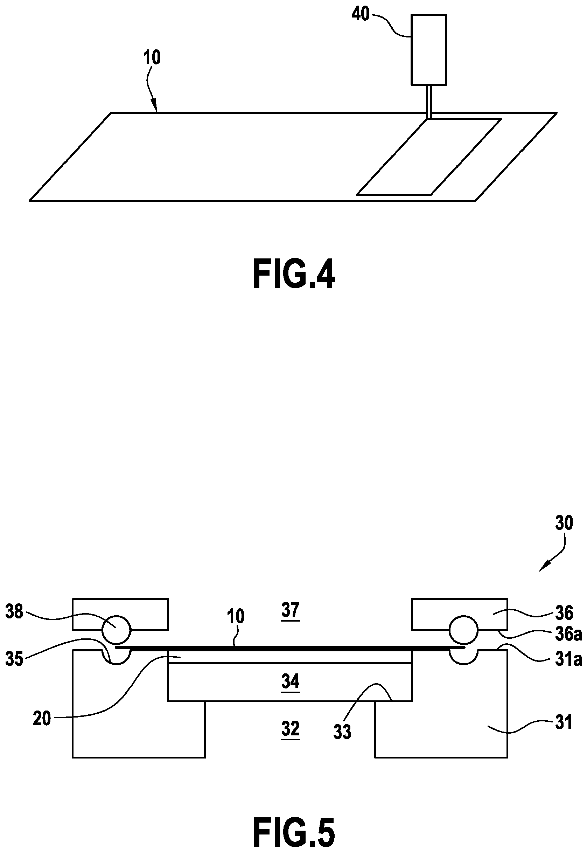

During the cutting operation, also illustrated on FIG. 4, the membrane electrode assembly 10 is clamped in a clamping tool 30 illustrated on FIG. 5. This clamping tool 30 comprises a clamping base 31, having a rectangular shape and therefore defining a central hollow 32 of a rectangular shape. The clamping base 31 includes a shoulder 33 bordering the circumference of the central hollow 32. In this central hollow 32 are arranged a height-adjusting insert 34, lying on the shoulder 33, and the sublayer 20, lying on the height-adjusting insert 34. The top surface 31a of the clamping base 31 is provided with a groove 35 surrounding the central hollow 32.

The clamping tool 30 also comprises a clamping lid 36, having a rectangular shape and therefore defining a central window 37 of a rectangular shape. The bottom surface 36a of the clamping lid 36 is provided with a seal 38, for instance of the O-ring type, surrounding the central window 37 and located so as to cooperate with the groove 35 when the clamping lid 36 is pressed against the clamping base 31.

During the cutting operation, the membrane electrode assembly 10 is installed on the top surface 31a of the clamping base 31 and on the sublayer 20, which is flush with the top surface 31a; then the clamping lid 36 is pressed against the clamping base 31 and the edges of the membrane electrode assembly 10 are clamped between the seal 38 and the groove 35.

The cutting operation is carried out by a laser 40. In this example, the laser 40 is a femtolaser of the brand Trumpf. Particularly, the laser 40 has a pulse duration of 350 fs, a wavelength of 532 nm (green light) and a spot diameter d of 4 µm (in the focus plane of the beam). The power P of the laser 40 is adjustable, particularly between 5 W and 10 W in the present example. The frequency f of the pulses is also adjustable, particularly between 100 kHz to 400 kHz in the present example. Therefore, in the present example, the fluence Φ of the laser 40, which is derivable from the pulse frequency f and the laser power P, is adjustable between 32 J/cm² and 255 J/cm².

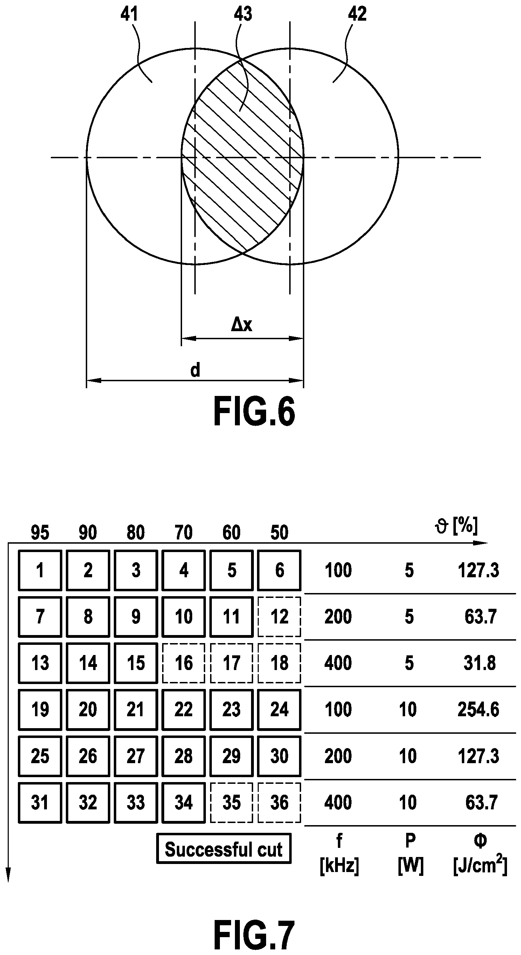

The beam of the laser 40 is piloted by a piloting unit so as to follow the pattern to be cut in the membrane electrode assembly 10. During the cutting operation, the laser beam is piloted so as to ensure, from one pulse to the other, an overlap of the spot impacted by the laser beam. This pulse overlap is schematically depicted on FIG. 6: the circle 41 corresponds to the spot of the laser beam during a given pulse while the circle 42 corresponds to the spot of the laser beam during the pulse immediately following the given pulse. Therefore, the hatched area 43 is the area which overlaps the two succeeding spots 41, 42 and Δx is the pitch between the spots 41, 42 of two succeeding pulses: hence the pulse overlap θ is defined as the ratio of this pitch Δx on the spot diameter d.

Test results will now be presented with reference to FIG. 7 to 19.

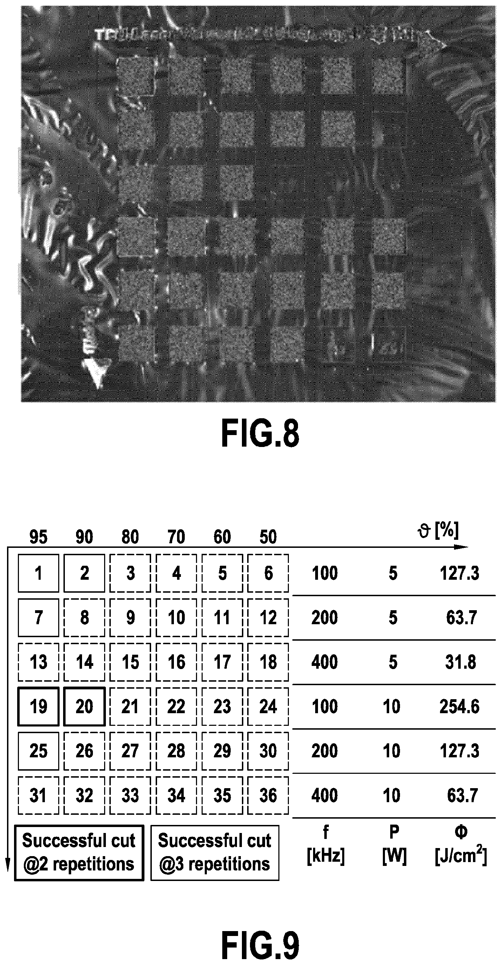

In a first test, corresponding to FIG. 7 and 8, a two-layer stack comprising the catalyst layer 13 and the membrane 14 was cut, without the use of a sublayer. The laser 40 presented above was used with different parameters. Specifically, 36 squares of 5x5 mm were attempted to be cut using each time a different set of parameters. In this test grid, three values for the pulse frequency f, two values for the laser power P and six values for the pulse overlap θ were tested, as detailed in the table of FIG. 7. The squares successfully cut after a single repetition of the laser 40 are evidenced by a bold frame in the table.

Therefore, it can be seen that all but six of the squares were successfully cut. Among the unsuccessful tests, No 16, 17 and 18 correspond to a fluence Φ of 31.8 J/cm² with a pulse overlap θ lower than 70%; No 12, 35 and 36 correspond to a fluence Φ of 63.7 J/cm² with a pulse overlap θ lower than 60%.

FIG. 8 is a picture of this two-layer stack after the test. It can be seen that the cut lines are neat, without significant surrounding damage.

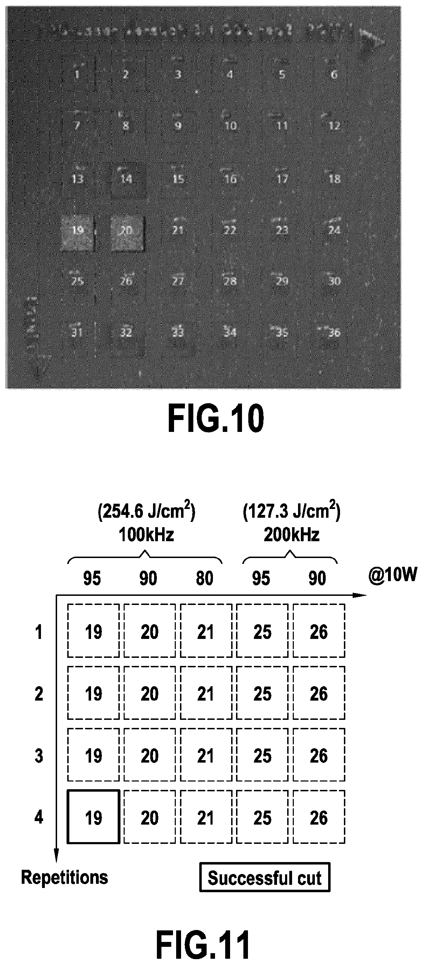

In a second test, corresponding to FIG. 9 and 10, the gas diffusion layer 12 was cut alone, without the use of a sublayer. The laser 40 presented above was used with different parameters. Specifically, the same grid of 36 squares was attempted to be cut using, for each square, the same set of parameters as above. The squares successfully cut after two repetitions of the laser 40 are evidenced by a bold frame in the table of FIG. 9 and those successfully cut after three repetitions are evident by a thin frame. No square was successfully cut after a single repetition.

Therefore, it can be seen that only two squares (No 19 and 20) were successfully cut after only two repetitions: these tests correspond to a fluence Φ of 254.6 J/cm² with a pulse overlap θ greater than 90%. Four other squares (No 1, 2, 7 and 25) were successfully cut after three repetitions: these tests correspond to a fluence Φ of 63.7 J/cm² with a pulse overlap θ equal to 95%, or to a fluence Φ of 127.3 J/cm² with a pulse overlap θ greater than 90%.

FIG. 10 is a picture of the gas diffusion layer 12 after the test. It can be seen that the cut lines are neat, without significant surrounding damage.

In a third test, corresponding to FIG. 11 to 13, a three-layer stack comprising the gas diffusion layer 12, the catalyst layer 13 and the membrane 14 was cut, with the use of a sublayer 20. In this third test, this sublayer 20 was made of PEEK, and the thickness of the sublayer 20 was greater than 100µm. The laser 40 presented above was used with different parameters. Specifically, a new grid of 20 squares was attempted to be cut: in each column, the same parameters were used, testing from a column to another values of pulse frequency of 100 kHz (at 10W, thus corresponding to a fluence Φ of 254.6 J/cm²) or 200 kHz (at 10W, thus corresponding to a fluence Φ of 127.3 J/cm²) and values of pulse overlap θ from 80 to 95%. In each line, the same number of repetitions was tested, with an increasing number of repetitions from a line to the other, from a single repetition to four succeeding repetitions. The squares successfully cut are evidenced by a bold frame in the table of FIG. 11.

Therefore, it can be seen that only one square (No 19₄) was successfully cut: this test correspond to a fluence Φ of 254.6 J/cm² with a pulse overlap θ of 95% after 4 repetitions.

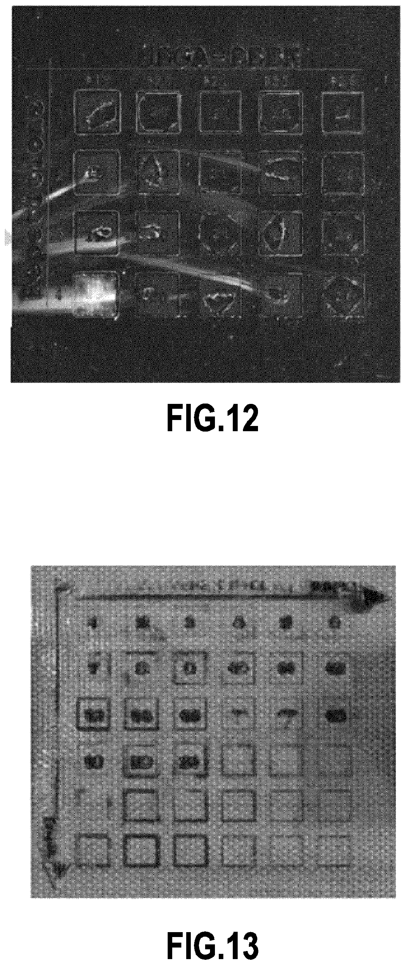

FIG. 12 is a picture of the stack after the test. It can be seen that damages are visible on most of the squares which were not successfully cut; fumes are also visible.

FIG. 13 is a picture of the sublayer 20 after another test carried out with the same stack using the 36-square test grid presented above. It can be seen that the sublayer shows black marks, which are impossible to clean and are signs of a high wear.

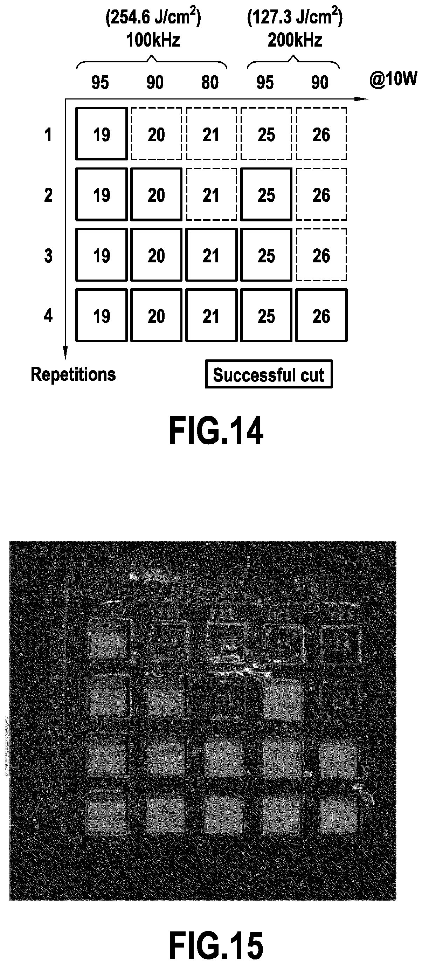

In a fourth test, corresponding to FIG. 14 to 16, the same three-layer stack and the same test grid as the third test were used. However, a different sublayer 20 was used: indeed, in this fourth test, the sublayer 20 is made of glass, more specifically of quartz glass, with a thickness of 10 mm. The squares successfully cut are evidenced by a bold frame in the table of FIG. 14.

Therefore, it can be seen that it was possible to successfully cut the square No 19₁ after only one repetition, using a fluence Φ of 254.6 J/cm² with a pulse overlap θ of 95%. After two repetitions, two additional squares were successfully cut: No 19₂ corresponding to a fluence Φ of 254.6 J/cm² with a pulse overlap θ of 90%; and No 25₂ corresponding to a fluence Φ of 127.3 J/cm² with a pulse overlap θ of 95%. After three repetitions, all the squares were successfully cut.

FIG. 15 is a picture of the stack after the test. It can be seen that the cut lines are neat, without significant surrounding damage. Particularly, the shrinkage of the membrane 14 with respect to the gas diffusion layer 12 was measured and its maximum value does not exceed 0.8 mm, at the corners of some squares.

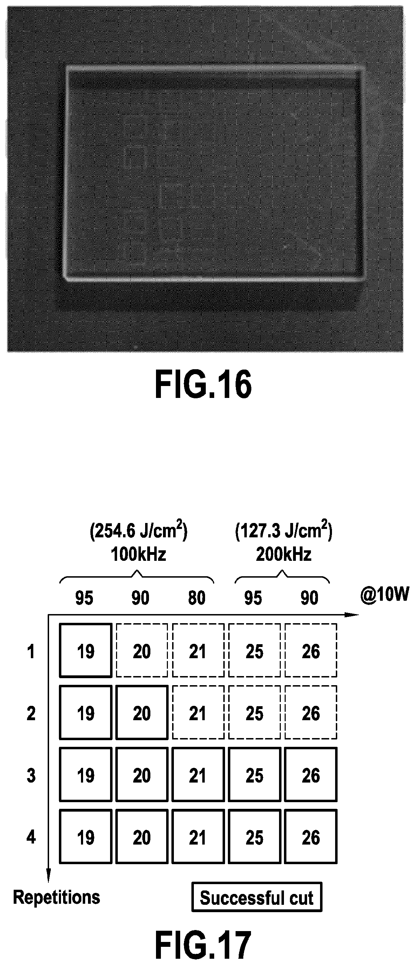

FIG. 16 is a picture of the sublayer 20 after another test carried out with the same stack using the 36-square test grid presented above. The marks are easy to clean and only leave low-grade wear.

In a fifth test, corresponding to FIG. 17 to 19, the same three-layer stack and the same test grid as the third test were used. However, a different sublayer 20 was used: indeed, in this fifth test, the sublayer 20 is made of ceramic, more specifically of aluminum oxide (AlO₃), with a thickness of 10 mm. The squares successfully cut are evidenced by a bold frame in the table of FIG. 17.

Therefore, it can be seen that it was possible to successfully cut the square No 19₁ after only one repetition, using a fluence Φ of 254.6 J/cm² with a pulse overlap θ of 95%. After two repetitions, a second square (No 19₂), corresponding to a fluence Φ of 254.6 J/cm² with a pulse overlap θ of 90%, was also successfully cut. After three repetitions, all the squares were successfully cut.

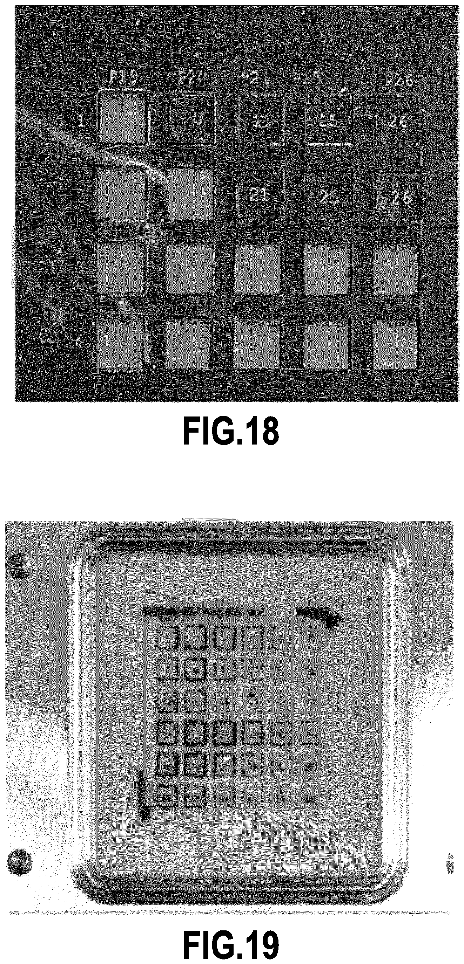

FIG. 18 is a picture of the stack after the test. It can be seen that the cut lines are neat, without significant surrounding damage. Particularly, the shrinkage of the membrane 14 with respect to the gas diffusion layer 12 was measured and its maximum value does not exceed 0.2 mm at the edges and 0.4 mm at the corners.

FIG. 19 is a picture of the sublayer 20 after another test carried out with the same stack using the 36-square test grid presented above. It can be seen that the sublayer shows black marks. However, these black marks are easy to clean; only low grade wear remains.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A method for cutting a stack of at least two layers,
the method comprising:
- using a laser (40) generating a pulsed beam directed toward the stack (10),
- piloting the beam so as to follow a pattern to be cut in the stack (10),
wherein the pulse duration of the beam is lower than 10 ps,
wherein the fluence (Φ) of the beam is greater than 127 J/cm², and
wherein the pulse overlap (θ) of the beam between two successive pulses is greater than 50%.

2. The method of claim 1, wherein the stack is a membrane electrode assembly (10) including at least a membrane (14) and a catalyst layer (13) stacked together.

3. The method of claim 2, wherein the membrane electrode assembly (10) further includes a gas diffusion layer (12) which is cut through by the laser beam.

4. The method of claim 2 or 3, wherein the membrane electrode assembly (10) comprises a first catalyst layer (13), on a first side of the membrane (14), and a second catalyst layer (15), on a second side of the membrane (14).

5. The method of any one of claims 1 to 4, wherein the pulse duration of the beam is lower than 8 ps, optionally lower than 500 fs, still optionally lower than 350 fs.

6. The method of any one of claims 1 to 5, wherein the spot diameter (d) of the beam is lower than 10 µm.

7. The method of any one of claims 1 to 6, wherein the wavelength of the beam is comprised between 400 and 1100 nm, optionally between 500 and 580 nm, still optionally between 515 and 540 nm.

8. The method of any one of claims 1 to 7, wherein the fluence (Φ) of the beam is greater than 250 J/cm².

9. The method of any one of claims 1 to 8, wherein the fluence (Φ) of the beam is lower than 500 J/cm², optionally lower than 300 J/cm², still optionally lower than 150 J/cm².

10. The method of any one of claims 1 to 9, wherein the pulse overlap (θ) of the beam is greater than 80%, optionally is greater than 90%, still optionally greater than 95%.

11. The method of any one of claims 1 to 10, wherein at least a given portion of the pattern to be cut is swept by the beam of the laser (40) more than one time and up to ten times, optionally two, three or four times.

12. The method of any one of claims 1 to 11, wherein a supporting sublayer (20) is provided under the stack (10) during the use of the laser (40), the supporting sublayer (20) not being cut through by the beam.

13. The method of claim 12, wherein the supporting sublayer (20) is made of inorganic material, optionally of metal, ceramic or glass.

14. The method of claim 12 or 13, wherein the thickness of the supporting sublayer (20) is comprised between 0.1 mm to 50 mm, optionally between 0.5 mm to 10 mm.

15. The method of any one of claims 1 to 14, wherein the stack (10) is clamped in a clamping tool (30) during the use of the laser (40).

## Amended claims

### Amended claims in accordance with Rule 137(2) EPC.

1. A method for cutting a stack of at least two layers,
the method comprising:
- using a laser (40) generating a pulsed beam directed toward the stack (10),
- piloting the beam so as to follow a pattern to be cut in the stack (10),
wherein the pulse duration of the beam is lower than 10 ps, and
wherein the pulse overlap (θ) of the beam between two successive pulses is greater than 50 %, **characterized in that**
the fluence (Φ) of the beam is greater than 127 J/cm² and lower than 150 J/cm² and **in that** a supporting sublayer (20) is provided under the stack (10) during the use of the laser (40), the supporting sublayer (20) not being cut through by the beam.

2. The method of claim 1, wherein the stack is a membrane electrode assembly (10) including at least a membrane (14) and a catalyst layer (13) stacked together.

3. The method of claim 2, wherein the membrane electrode assembly (10) further includes a gas diffusion layer (12) which is cut through by the laser beam.

4. The method of claim 2 or 3, wherein the membrane electrode assembly (10) comprises a first catalyst layer (13), on a first side of the membrane (14), and a second catalyst layer, on a second side of the membrane (14).

5. The method of any one of claims 1 to 4, wherein the pulse duration of the beam is lower than 8 ps, optionally lower than 500 fs, still optionally lower than 350 fs.

6. The method of any one of claims 1 to 5, wherein the spot diameter (d) of the beam is lower than 10 µm.

7. The method of any one of claims 1 to 6, wherein the wavelength of the beam is comprised between 400 and 1100 nm, optionally between 500 and 580 nm, still optionally between 515 and 540 nm.

8. The method of any one of claims 1 to 7, wherein the pulse overlap (θ) of the beam is greater than 80%, optionally is greater than 90%, still optionally greater than 95%.

9. The method of any one of claims 1 to 8, wherein at least a given portion of the pattern to be cut is swept by the beam of the laser (40) more than one time and up to ten times, optionally two, three or four times.

10. The method of any of claims 1 to 9, wherein the supporting sublayer (20) is made of inorganic material, optionally of metal, ceramic or glass.

11. The method of any of claims 1 to 10, wherein the thickness of the supporting sublayer (20) is comprised between 0.1 mm to 50 mm, optionally between 0.5 mm to 10 mm.

12. The method of any one of claims 1 to 11, wherein the stack (10) is clamped in a clamping tool (30) during the use of the laser (40).
